**Europäisches Patentamt**

**European Patent Office**

**Office européen des brevets**

(11) Numéro de publication: **0 036 341**
**B1**

(12) **FASCICULE DE BREVET EUROPEEN**

(45) Date de publication du fascicule du brevet: **03.10.84**

(51) Int. Cl.³: **G 02 B 15/00**

(21) Numéro de dépôt: **81400202.8**

(22) Date de dépôt: **10.02.81**

(54) **Système optique pour la réalisation d'effets spéciaux sur un film vierge.**

(30) Priorité: **12.03.80 FR 8005519**

(43) Date de publication de la demande:
**23.09.81 Bulletin 81/38**

(45) Mention de la délivrance du brevet:
**03.10.84 Bulletin 84/40**

(84) Etats contractants désignés:
**DE GB**

(56) Documents cités:
**FR-A- 860 192**
**FR-A-1 180 278**
**FR-A-1 597 608**
**US-A-2 843 016**
**US-A-3 867 022**
**US-A-4 025 167**
**US-A-4 150 883**

(73) Titulaire: **Cattelani, Claude**
**1, Square de la Mayenne**
**F-75017 Paris (FR)**

(73) Titulaire: **Perichon, Catherine**
**5, Square de la Beauce**
**F-77100 Meaux/Beauval (FR)**

(72) Inventeur: **Cattelani, Claude**
**1, Square de la Mayenne**
**F-75017 Paris (FR)**
Inventeur: **Perichon, Catherine**
**5, Square de la Beauce**
**F-77100 Meaux/Beauval (FR)**

(74) Mandataire: **Tony-Durand, Serge**
**Cabinet Tony-Durand 22, Boulevard Voltaire**
**F-75011 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**0 036 341**

## Description

La présente invention a pour objet un système optique pour la réalisation d'effets spéciaux sur un film vierge.

Les systèmes optiques agencés pour la réalisation d'effets spéciaux sur un film vierge par superposition sur celui-ci d'au moins un film déjà impressionné sont couramment appelés "trucas" ou "bancs-titres" selon que la caméra déroulant la film vierge et les objectifs du dispositif se déplacent respectivement horizontalement ou verticalement. A chaque projecteur d'images est associé un objectif à focale fixe, une truca pouvant ainsi comprendre un projecteur principal, un projecteur d'images aériennes et un projecteur "beam-splitter" (diviseur optique), permettant d'exécuter un renvoi à 90 degrés par rapport à l'axe de la caméra. Les systèmes connus sont équipés d'une combinaison mécanique permettant de déplacer horizontalement l'objectif de la caméra ainsi que la caméra et l'objectif du projecteur aérien, ainsi que le projecteur, afin d'obtenir soit un agrandissement soit une réduction selon le sens du déplacement, et ce tout en conservant le point sur le plan du film vierge durant tout le parcours de l'objectif.

Pour les bancs-titres, le principe est le même, le chariot de la caméra se déplaçant alors verticalement et le plan de netteté étant situé sur la table du banc.

Or, on constate que dans ces systèmes optiques, du fait de l'existence d'un jeu mécanique que l'on neu peut pratiquement pas supprimer, le point ne demeure pas constant et peut passer soit en avant soit en arrière du plan du film vierge sur lequel on veut combiner les films montés sur les projecteurs. L'invention a pour but de remédier à ces inconvénients en remplaçant les objectifs à focale fixe des trucas et bancs-titres classiques par des objectifs à focale variable et à point automatique, associés à des moyens particuliers de montage permettant de réaliser les effets spéciaux désirés.

Bien entendu certains systèmes optiques comportent déjà des objectifs à focale variable, mais il s'agit de systèmes de nature différente, destinés à des applications également différentes.

Ainsi le brevet US—A—4.150.883 décrit un appareil pour réaliser des dessins animés à partir de diapositives qu'on déplace. Cet appareil comprend une caméra munie d'un objectif à focale variable qui permet de filer une image aérienne obtenue à partir d'une diapositive au moyen d'un système optique approprié. Cet appareil ne constitue donc pas une truca ou un banctitre. Du reste un tel appareil ne permet en aucune façon de réaliser les effets spéciaux pour l'obtention desquels est conçu les système optique selon l'invention.

Ces système optique qui constitué une truca ou un banc-titre, et qui comprend au moins un objectif à focale variable, associé à des moyens de projection d'au moins un film impressionné sur le film vierge, en vue de l'obtention des effets spéciaux, est caractérisé en ce qu'il comporte des moyens pour faire pivoter l'objectif à focale variable autour d'un axe horizontal perpendiculaire à l'axe optique du système, de façon à pouvoir lui faire occuper successivement deux positions symétriques par rapport à cet axe après retournement de 180 degrés.

De préférence le ou les objectifs à focale variable du présent système optique sont constitués chacun par quatre groupes de lentilles, à savoir:

— un premier group convergent de quatre lentilles,
— un second groupe divergent de quatre lentilles,
— un troisième groupe convergent de six lentilles,
— un quatrième groupe convergent de deux lentilles,

les premier et troisième groupes étant solidaires et mobiles, et les caractéristiques sont telles que:

— lorsque l'objectif est situé entre son axe de pivotement et l'objet, le grandissement correspondant aux limites de déplacement en translation du premier et du troisième groupe varie sensiblement entre 1 et 4, et
— lorsque l'objectif est placé dans sa seconde position après retournement autour de l'axe à partir de la position précédente, la reduction obtenue par translation du premier et du troisième groupes varie sensiblement entre 1 et 0,25.

Dans le cas d'un banc-titre, l'objectif à point automatique et focale variable prévu par l'invention permet d'obtenir des agrandissements ou des réductions avec un rapport de 1 à 20.

D'autres particularités et avantages de l'invention apparaîtront au cours de la description qui va suivre. Aux dessins annexés, on a représente à titre d'exemples non limitatifs deux formes de réalisation de l'invention.

— La figure 1 est une vue en perspective simplifiée d'une première forme de réalisation de l'invention, constituée par une truca équipée de deux objectifs à focale variable selon l'invention.

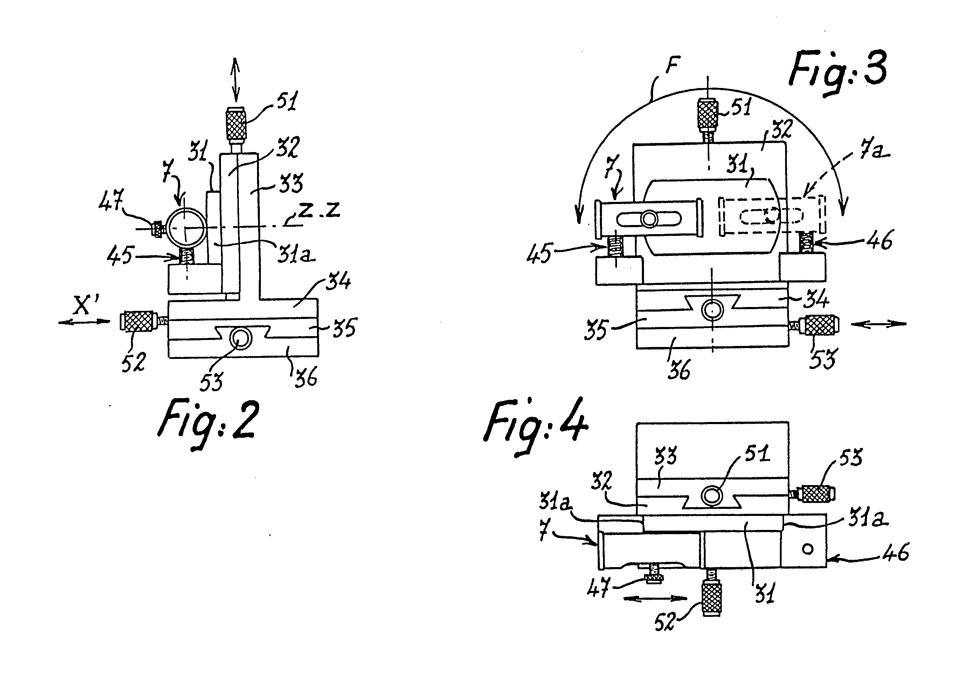

— La figure 2 est une vue en élévation partielle suivant l'axe optique de la truca de la figure 1, montrant le montage d'un objectif à focale variable.

2

**0 036 341**

— La figure 3 est une vue en élévation latérale de l'objectif à focale variable de la figure 2 ainsi que de son support.

— La figure 4 est une vue de dessus en plan de l'objectif à focale variable des figures 2 et 3, ainsi que de son support.

— La figure 5 est un schéma optique donnant le principe de l'objectif conforme à l'invention.

— La figure 6 est un schéma représentant les éléments constitutifs des différents groupes de lentilles de l'objectif à focale variable selon l'invention.

— La figure 7 est un schéma explicatif de la possibilité de retournement de l'objectif à focale variable autour d'un axe équidistant de l'objet et de l'image, conformément à une caractéristique essentielle de l'invention.

— La figure 8 est une vue en perspective schématique d'un seconde forme de réalisation de l'invention, dans laquelle l'objectif à focale variable et à point automatique équipe un banc-titre.

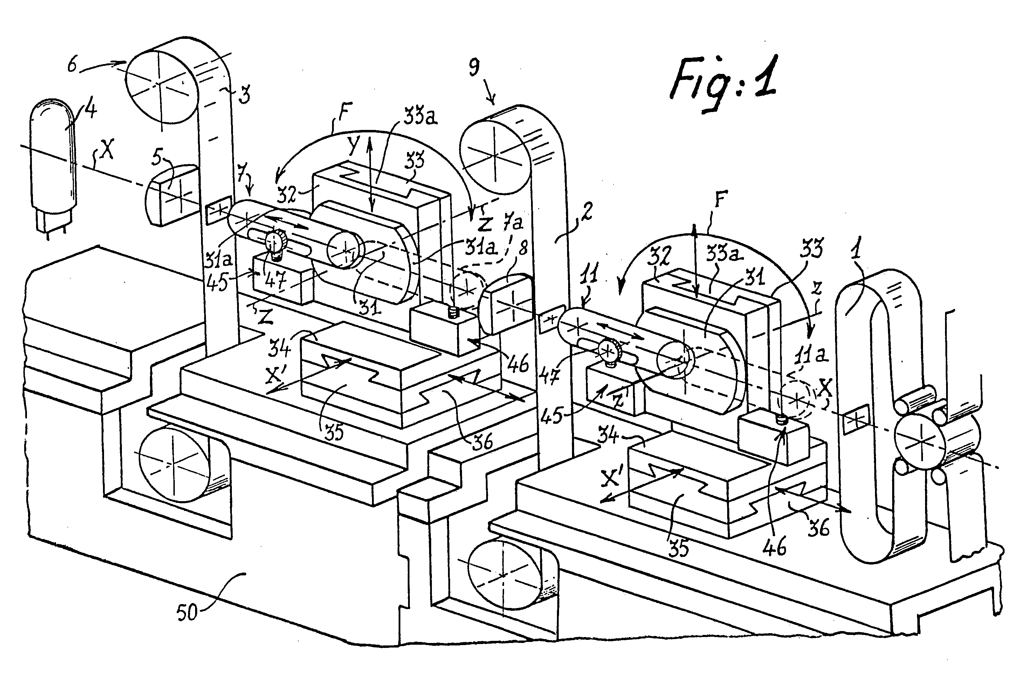

Le système optique représenté schématiquement à la figure 1 est une "truca", c'est-à-dire un dispositif destiné à la réalisation d'effets spéciaux sur un film vierge 1 déroulé par une caméra non représentée, et ce à partir de la combinaison de deux films impressionnés 2, 3, projetés respectivement par un projecteur principal 9 et un projecteur d'images aériennes 6.

Le dispositif comporte, de façon connue, à partir de son extrémité opposée à la caméra de déroulement du film 1, une lampe 4, un condenseur 5, le projecteur d'images aériennes 6 déroulant le film 3, un premier objectif 7, un condenseur 8, le projecteur principal 9 pour la projection du second film 2, un second objectif 11. Tous ces éléments sont disposés sur un châssis 50 de support, suivant un axe optique général X—X du système.

La truca représentée à la figure 1 est équipée de deux objectifs 7, 11 à focale variable et à point automatique, destinés à permettre des agrandissements ou des réductions des images défilant sur les projecteurs 6, 9 dans des limites prédéterminées, et en maintenant rigoureusement l'image obtenue dans le plan du film vierge 1.

Les objectifs 7 et 11 sont chacun solidarisés avec une semelle latérale 31, disposée verticalement et montée rotativement sur un bloc 32 autour d'un axe Z—Z horizontal et perpendiculaire à l'axe optique X—X.

Le bloc 32 est lui-même monté coulissant dans un plan vertical parallèle à l'axe X—X, sur une plaque verticale 33; la liaison coulissante entre la plaque 33 et le bloc associé 32 peut être réalisée par exemple par un agencement du type tenon-mortaise en queue d'aronde comme représenté à la figure 1, sur laquelle on voit que la plaque 33 comporte un tenon 33a en queue d'aronde engagé dans une mortaise correspondante du bloc 32.

L'ensemble constitué par l'objectif 7 (ou 11) et son support 32, 33 est lui-même monté sur un socle 34 pouvant coulisser sur une embase 35 suivant un axe X' parallèle à l'axe Z—Z. Enfin, l'embase 35 est elle-même montée coulissante suivant l'axe optique X—X sur un socle 36, les liaisons coulissantes entre d'une part le socle 36 et l'embase 35, et d'autre part entre cette dernière et la plaque 34 étant obtenues par des montages coulissants tenon-mortaise en queue d'aronde, comme entre la plaque 33 et le bloc 32.

Tous les déplacements suivant l'axe X—X, l'axe X', l'axe vertical Y de glissement du bloc 32 peuvent être réglés au moyen de vis micrométriques 51, 52, 53.

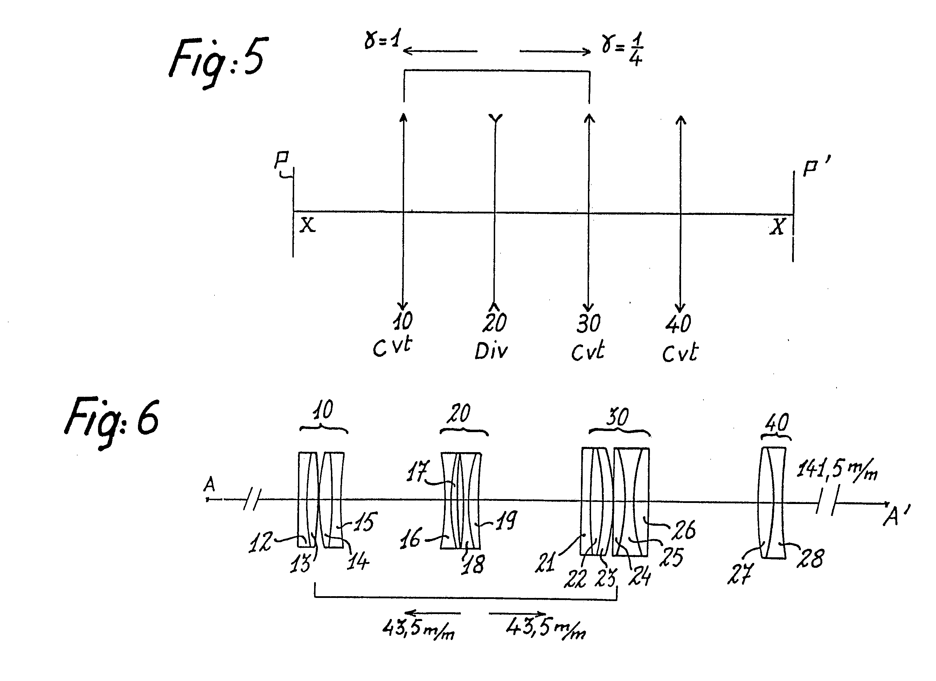

L'axe horizontal Z—Z, autour duquel la semelle 31 portant l'objectif 7, 11 est montée pivotante, est situé à mi-distance entre le plan de l'objet P (figure 5) et le plan de l'image P' correspondant au film vierge 1, et parallèle à ces plans. De ce fait, suivant une caractéristique essentielle de l'invention, un pivotement de la semelle 31 autour de l'axe Z—Z, suivant un secteur de 180 degrés comme représenté par les flèches F portées à la figure 1, permet de retourner l'objectif 7 ou 11 pour lui faire occuper une position 7a, 11a, symétrique de la position précédente par rapport à l'axe Z—Z. Il convient d'ailleurs de remarquer que ces positions 7a, 7 et 11a, 11 sont également chacune symétriques par rapport à l'axe vertical correspondant Y.

Pour chaque objectif 7, 11, le support comporte deux butées latérales 45, 46 à tiges verticales, fixées à la base du bloc 32 et de part et d'autre de la semelle 31. Ces butées 45, 46 permettent de régler convenablement l'horizontalité de l'objectif 7 ou 11 dans chacune de ses deux positions, l'objectif venant s'appuyer sur l'une ou l'autre des tiges. Les bords opposés 31a de la semelle 31 sont arrondis pour permettre le pivotement de celle-ci et de l'objectif (7, 11) entre les butées 45, 46.

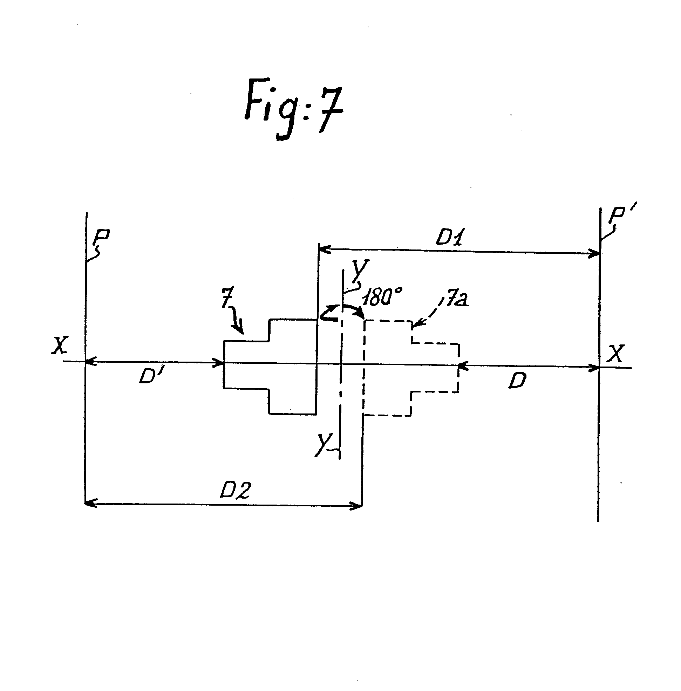

On a représenté schématiquement à la figure 7 la possibilité de retournement de l'objectif 7 (ou 11): conformément à l'invention, l'objectif peut prendre l'une ou l'autre de deux positions symétriques par rapport à l'axe vertical Y—Y, après pivotement de 180 degrés autour de l'axe horizontal Z—Z. Dans la position 7a, la distance D séparant l'objectif du plan-image D' est égale à la distance D' séparant le plan-objet P de l'objectif. Corrélativement, la distance D1 entre l'objectif 7 placé dans sa position représentée en trait plein, et le plan-image P' est égale à la distance D2 entre la face arrière de l'objectif retourné en 7a et le plan-objet P. L'objectif 7, 11 ayant une silhouette ou "formule" qui sera décrite en détail ci-après, on a les valeurs numériques suivantes:

D1=D2=355,05 mm

D=D'=141,5 mm

3

**0 036 341**

On décrira maintenant l'objectif (7 ou 11), en se référant aux figures 5 et 6.
L'objectif 7 selon l'invention est constitué par quatre groupes de lentilles, à savoir:

— un premier groupe convergent 10 de quatre lentilles 12 à 15 (représentées en détail à la figure 6),
— un second groupe divergent 20 de quatre lentilles 16 à 19.
— un troisième groupe convergent 30 de six lentilles 21 à 26, et
— un quatrième groupe convergent 40 de deux lentilles 27, 28,

les premier et troisième groupes 10, 30 étant solidaires et mobiles.

Le déplacement de ces groups solidaires 10, 30 est assuré au moyen d'un bouton micrométrique 47 de façon connue en soi, chacun des groupes 10 et 30 étant ainsi susceptible de se déplacer de 43,5 mm.

P étant le plan de l'objet et P' étant le plan du film 1, un déplacement en direction du plan P des groupes mobiles 10, 30 entraîne un grandissement de l'image dans le plan P', tandis qu'inversement un déplacement vers le plan P' des groupes de lentilles 10, 30 entraîne une réduction de l'image.

Sur la figure 6, le plan P correspond au point A et le point P' correspond au point A'.

La formule ou silhouette de l'objectif à point automatique et à focale variable selon l'invention est donnée dans le tableau suivant, dans lequel:

— R est le rayon de courbure des faces successives des lentilles, avec une précision 0,002 mm,
— E est l'épaisseur des lentilles en millimètres, avec une précision de 0,1 mm,
— Nd est l'indice de réfraction des lentilles, et
— NU ($v$) est une caractéristique complémentaire des lentilles.

|  |  | R | E | Nd | NU |
|---|---|---|---|---|---|
|  | 1 | PLAN |  |  |  |
|  |  |  | 3.00000 | 1.696500 | 35,6 |
|  | 2 | 103.0000 |  |  |  |
|  |  |  | 6.00000 | 1.697000 | 56 |
|  | 3 | −202.4481 |  |  |  |
|  |  |  | 0.10000 | AIR |  |
| GROUPE 1 | 4 | 109.0000 |  |  |  |
|  |  |  | 5.50000 | 1.697000 | 56 |
|  | 5 | −184.0000 |  |  |  |
|  |  |  | 0.05000 | AIR |  |
|  | 6 | −175.8000 |  |  |  |
|  |  |  | 3.00000 | 1.696500 | 36,5 |
|  | 7 | 264.6000 |  |  |  |
|  |  |  | 45.86100 | AIR |  |
|  | 8 | −102.2700 |  |  |  |
|  |  |  | 2.00000 | 1.464500 | 65,7 |
|  | 9 | 83.8300 |  |  |  |
|  |  |  | 3.50000 | 1.740000 | 28,1 |
|  | 10 | 163.9200 |  |  |  |
|  |  |  | 1.50000 | AIR |  |

4

**0 036 341**

TABLE (contd.)

| | | R | E | Nd | NU |
|---|---|---|---|---|---|
| GROUPE 2 | 11 | −200.3200 | | | |
| | | | 2.00000 | 1.464500 | 65,7 |
| | 12 | 59.8200 | | | |
| | | | 3.50000 | 1.740000 | 28,1 |
| | 13 | 91.8607 | | | |
| | | | 46.76600 | AIR | |
| | 14 | 1991.4000 | | | |
| | | | 3.00000 | 1.613099 | 44,4 |
| | 15 | 200.0000 | | | |
| | | | 6.00000 | 1.608750 | 59 |
| | 16 | −185.8000 | | | |
| | | | 0.10000 | AIR | |
| GROUPE 3 | 17 | −212.8000 | | | |
| | | | 5.00000 | 1.608750 | 59 |
| | 18 | −91.9756 | | | |
| | | | 0.10000 | AIR | |
| | 19 | PLAN | | | |
| | | | 6.00000 | 1.608750 | 59 |
| | 20 | −65.0000 | | | |
| | | | 3.00000 | 1.613099 | 44,4 |
| | 21 | 65.0000 | | | |
| | | | 6.00000 | 1.608750 | 59 |
| | 22 | PLAN | | | |
| | | | 47.34500 | AIR | |
| | 23 | 93.2200 | | | |
| | | | 7.00000 | 1.603500 | 64 |
| | 24 | −135.8300 | | | |
| GROUPE 4 | | | 0.50000 | AIR | |
| | 25 | −114.6300 | | | |
| | | | 3.00000 | 1.613099 | 44,4 |
| | 26 | 242.8000 | | | |
| | | | 141.53047 | AIR | |

5

L'objectif étant placé dans la position représentée en trait plein à la figure 7, le déplacement vers la gauche, c'est-à-dire vers le plan-objet P des premier et troisième groupes de lentilles solidaires 10, 30 provoque un grandissement de l'image dans le plan P', pouvant varier entre 1 et 4 environ. Après retournement de l'objectif 7 de 180 degrés autour de l'axe Z—Z jusqu'à la position 7a, le déplacement au moyen du bouton 47 des groupes de lentilles 10, 30 entre les limites déterminées par les caractéristiques de l'objectif permet l'obtention d'une réduction de l'image dans un rapport variant de 1 à 0,25.

Les avantages de l'objectif et du système optique équipé de cet objectif pour la réalisation d'effets spéciaux (truca représentée à la figure 1 ou bancs-titres) sont les suivants:

— Le fait de remplacer l'objectif à focale fixe des caméras ou des projecteurs de trucas ou de bancs-titres par l'objectif à focale variable selon l'invention, permet de laisser fixes les caméras ou les projecteurs équipés de cet objectif à focale variable. En effet, c'est uniquement la focale de l'objectif qui en variant, provoque le phénomène de réduction ou d'agrandissement du champ désiré. Ce dispositif possède donc l'énorme avantage de permettre l'élimination complète du jeu des parties mécaniques qui ne pouvait être supprimé dans les systèmes connus, ce jeu étant générateur de différences de netteté dans les images obtenues sur le film vierge.

La suppression des parties mécaniques permettant de déplacer les caméras ou les projecteurs simplifie, d'autre part, la fabrication de façon considérable et réduit corrélativement le prix de revient du système optique.

— Le rapport des focales extrêmes, considérablement réduit, permet une meilleure correction des aberrations.
— L'objectif à focale variable selon l'invention étant incorporé dans un système pivotant tel que celui représenté à la figure 1, il est aisé de le faire basculer dans un sens ou dans l'autre pour procéder à des réductions ou à des agrandissements de l'image.
— Aucune correction de diaphragme avec l'objectif à focale variable selon l'invention n'est nécessaire dans les opérations d'agrandissement ou de réduction, ce qui rend inutiles les systèmes électromécaniques ou électroniques de compensation de lumière, nécessaires dans les systèmes traditionnels, en raison des déplacements importants du plan film et de l'objectif (qui croît et décroît en fonction du carré de la distance).
— La suppression des parties mécaniques mobiles des dispositifs connus par l'installation d'au moins un objectif à focale variable dans un système fixe simplifie la fabrication des trucas ou des bancs-titres, et réduit leur encombrement de façon très sensible.
— Enfin, si la truca ou le banc-titre est équipé d'une lanterne additive ou soustractive, le flux lumineux de cette dernière n'est pas modifié au cours des opérations d'agrandissement et de réduction, ce qui n'est pas le cas dans un système classique.

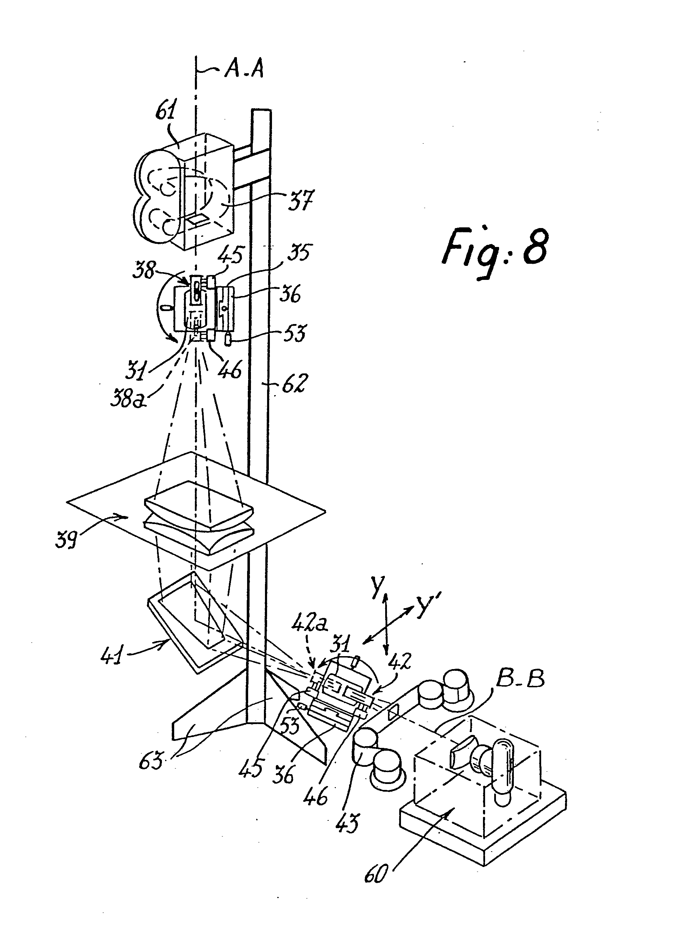

On a représenté de manière simplifiée à la figure 8 un banc-titre susceptible d'être équipé de deux objectifs à focale variable selon l'invention.

Le système comprend: un premier film 43 déroulé par un projecteur 60, un objectif à focale variable 42 sur un système pivotant analogue à celui visible à la figure 1, un miroir réflecteur 41 qui renvoie le flux lumineux vers un dispositif à condenseur 39 sur lequel on pose un document non représenté. Les supports des organes 39 et 41, connus en soi, n'ont pas été représentés. Cette image aérienne et ce document sont repris par un objectif à focale variable 38 monté sur un système pivotant, analogue à celui de la figure 1. L'image résultante est reçue par un film vierge 37 déroulé par une caméra 61 assujettie de façon réglable en hauteur à un montant vertical 62 pourvu à sa base d'ailes 63 de maintien.

L'axe A—A de l'objectif 38 et du condenseur 39 est vertical, alors que l'axe B—B de l'objectif 42 et du projecteur 50 déroulant le film 43 est horizontal.

Les supports des objectifs 42 et 38 sont, comme on le voit, analogues à ceux des objectifs 7 et 11 et sont donc affectés des mêmes numéros de référence. Corrélativement, l'objectif 38 peut basculer autour d'un axe horizontal, perpendiculaire à la semelle 31 et au plan de la figure 8, ainsi qu'à l'axe optique vertical A—A, pour venir prendre la position 38a représentée en trait mixte. De même, l'objectif 42 peut pivoter autour d'un axe vertical perpendiculaire à l'axe optique horizontal B—B, la semelle 31 pouvant basculer autour de cet axe vertical avec l'objectif 42.

L'objectif à point automatique et à focale variable visé par l'invention permet d'obtenir, dans le cas du banc-titre de la figure 8, des agrandissements ou des réductions avec un rapport de 1 à 20.

L'invention n'est pas limitée aux formes de réalisation décrites et peut comporter de nombreuses variantes d'exécution. Ainsi, il est évident que, dans le cas d'une truca ou d'un banc-titre pourvu de deux objectifs, l'un seulement de ceux-ci peut être conforme à l'invention ou bien les deux. Il est également possible de réaliser diverses combinaisons avec plusieurs objectifs, conformes à l'invention soit en partie, soit en totalité, et l'on peut monter les objectifs sur tous dispositifs pivotants appropriés, équivalents de celui représenté aux dessins.

## 0 036 341

**Revendications**

1. Système optique pour la réalisation d'effets spéciaux sur un film vierge, constituant une truca ou un banc-titre et comprenant au moins un objectif à focale variable, associé à des moyens de projection d'au moins un film impressionné sur le film vierge, en vue de l'obtention des effets spéciaux, caractérisé en ce qu'il comporte des moyens pour faire pivoter l'objectif à focale variable (7 et/ou 11—38, 42) autour d'un axe horizontal perpendiculaire à l'axe optique du système, de façon à pouvoir lui faire occuper successivement deux positions symétriques par rapport à cet axe après retournement de 180 degrés.

2. Système optique selon la revendication 1, caractérisé en ce que les moyens pour faire pivoter l'objectif (7 ou 11) autour de l'axe précité (Z—Z) comprennent une semelle verticale (31, 31a) montée sur un bloc support (32) rotativement autour dudit axe, des butées de réglage des positions de l'objectif étant disposées de part et d'autre de la semelle.

3. Système optique selon l'une des revendications précédentes, constitué par un banc-titre qui comporte un projecteur (60) d'axe optique horizontal, apte à dérouler un premier film (43), un miroir réflecteur (41) renvoyant le flux lumineux vers un condenseur (39) destiné à recevoir un document, un film vierge (37) déroulé par une caméra (61) située au-dessus du condenseur (39) et portée par un organe de support (62, 63), de sorte que l'axe optique (A—A) de ce dernier et de la caméra est vertical, et deux objectifs à focale variable dont l'un (42) est monté entre le projecteur (60) et le réflecteur (41) à pivotement autour d'un axe vertical perpendiculaire à l'axe optique horizontal, et l'autre (38) est placé entre le condenseur (39) et la caméra (61) à pivotement autour d'un axe horizontal perpendiculaire à l'axe optique vertical (figure 8).

4. Système optique selon la revendication 1, caractérisé en ce que le ou les objectifs à focale variable (7 et/ou 11—38, 42) sont constitués chacun par quatre groupes de lentilles, à savoir:

— un premier groupe convergent (10) de quatre lentilles,
— un second groupe divergent (20) de quatre lentilles,
— un troisième groupe convergent (30) de six lentilles,
— un quatrième groupe convergent (40) de deux lentilles,

les premier et troisième groupes étant solidaires et mobiles, et les caractéristiques sont telles que:

— lorsque l'objectif est situé entre son axe de pivotement et l'objet, le grandissement correspondant aux limites de déplacement en translation du premier et du troisième groupes varie sensiblement entre 1 et 4, et
— lorsque l'objectif est placé dans sa seconde position après retournement autour de l'axe à partir de la position précédente, la réduction obtenue par translation du premier et du troisième groupes varie sensiblement entre 1 et 0,25.

5. Système optique selon la revendication 4 caractérisé en ce que le ou les objectifs à focale variable (7 et/ou 11—38 et 42) prévus dans celui-ci répond à la formule suivant dans laquelle:

— R est le rayon de courbure des faces successives des lentilles, avec une précision de 0,002 mm,
— E est l'épaisseur des lentilles en mm, avec une précision de 0,1 mm,
— Nd est l'indice de réfraction des lentilles et NU ($v$) est une caractéristique complémentaire des lentilles.

|  |  | R | E | Nd | NU |
|---|---|---|---|---|---|
|  | 1 | PLAN |  |  |  |
|  |  |  | 3.00000 | 1.696500 | 36,5 |
|  | 2 | 103.0000 |  |  |  |
|  |  |  | 6.00000 | 1.697000 | 56 |
|  | 3 | —202.4481 |  |  |  |
|  |  |  | 0.10000 | AIR |  |
| GROUPE 1 | 4 | 109.0000 |  |  |  |
|  |  |  | 5.50000 | 1.697000 | 56 |

7

TABLE (contd.)

|  |  | R | E | Nd | NU |
|---|---|---|---|---|---|
|  | 5 | −184.0000 |  |  |  |
|  |  |  | 0.05000 | AIR |  |
|  | 6 | −175.8000 |  |  |  |
|  |  |  | 3.00000 | 1.696500 | 36,5 |
|  | 7 | 264.6000 |  |  |  |
|  |  |  | 45.86100 | AIR |  |
|  | 8 | −102.2700 |  |  |  |
|  |  |  | 2.00000 | 1.464500 | 65,7 |
|  | 9 | 83.8300 |  |  |  |
|  |  |  | 3.50000 | 1.740000 | 28,1 |
|  | 10 | 163.9200 |  |  |  |
|  |  |  | 1.50000 | AIR |  |
| GROUPE 2 | 11 | −200.3200 |  |  |  |
|  |  |  | 2.00000 | 1.464500 | 65,7 |
|  | 12 | 59.8200 |  |  |  |
|  |  |  | 3.50000 | 1.740000 | 28,1 |
|  | 13 | 91.8607 |  |  |  |
|  |  |  | 46.76600 | AIR |  |
|  | 14 | 1991.4000 |  |  |  |
|  |  |  | 3.00000 | 1.613099 | 44,4 |
|  | 15 | 200.0000 |  |  |  |
|  |  |  | 6.00000 | 1.608750 | 59 |
|  | 16 | −185.8000 |  |  |  |
|  |  |  | 0.10000 | AIR |  |
| GROUPE 3 | 17 | −212.8000 |  |  |  |
|  |  |  | 5.00000 | 1.608750 | 59 |
|  | 18 | −91.9756 |  |  |  |
|  |  |  | 0.10000 | AIR |  |
|  | 19 | PLAN |  |  |  |
|  |  |  | 6.00000 | 1.608750 | 59 |

**0 036 341**

TABLE (contd.)

|  | | R | E | Nd | NU |
|---|---|---|---|---|---|
| | 20 | −65.0000 | | | |
| | | | 3.00000 | 1.613099 | 44,4 |
| | 21 | 65.0000 | | | |
| | | | 6.00000 | 1.608750 | 59 |
| | 22 | PLAN | | | |
| | | | 47.34500 | AIR | |
| | 23 | 93.2200 | | | |
| | | | 7.00000 | 1.603500 | 64 |
| | 24 | −135.8300 | | | |
| GROUPE 4 | | | 0.50000 | AIR | |
| | 25 | −114.6300 | | | |
| | | | 3.00000 | 1.613099 | 44,4 |
| | 26 | 242.8000 | | | |
| | | | 141.53047 | AIR | |

**Patentansprüche**

1. Optisches System zur Erzeugung von Spezialeffekten auf unbelichtetem Film mit einer Trick- oder Titelbank und mindestens einem Objektiv variabler Brennweite verbunden mit Einrichtungen zum Projizieren mindestens eines Filmbildes auf den unbelichteten Film zun Erzielen von Spezialeffekten, dadurch gekennzeichnet, daß Einrichtungen vorhanden sind zum Schwenken des Objektivs mit variabler Brennweite (7 und/oder 11—38, 42) um eine horizontale, senkrecht zur optischen Achse des Systems gelegene Achse, derart daß nacheinander nach der Drehung um 180° zwei zu dieser Achse symmetrische Stellungen eingenommen sind.

2. Optisches System nach Anspruch 1, dadurch gekennzeichnet daß die Einrichtungen zum Schwenken des Objectivs (7 oder 11) um die genannte Achse (Z—Z) eine senkrechte, an einem Trägerblock (32) um die besagte Achse schwenkbare Platte (31—31a) aufweisen, wobei seitlich der Platte Anschläge zur Einstellung der Lage des Objektivs vorgesehen sind.

3. Optisches System nach einem der vorangehenden Ansprüche, gekennzeichnet durch eine Titelbank mit einem Projektor (60) mit horizontaler optischer Achse zum Ablaufenlassen eines ersten Films (43), einem Reflektorspiegel (41), welcher den Lichtstrom auf eine, eine Vorlage aufnehmenden Kondensor (39) lenkt, einem unbelichteten, von einer übe dem Kondensor (39) gelegenen, von einem Halteorgan (62, 63) getragenen Kamera (61), ablaufenden Film (37), wobei die optische Achse (A—A) letzterer und der Kamera vertikal angeordnet ist, zwei Objektiven mit variabler Brennweite von denen eines (42) zwischen dem Projektor (60) und dem Reflektor (41), um eine vertikale senkrecht zur horizontalen optischen Achse liegenden Achse schwenkbar angeordnet ist und das andere Objektiv (38) zwischen dem Kondensor (39) und der Kamera (61) um eine Horizontale senkrecht zur vertikalen optischen Achse schwenkbar angeordnet ist (Fig. 8).

4. Optisches System nach Anspruch 1, dadurch gekennzeichnet, daß das oder die Objektive mit variabler Brennweite (7 und/oder 11—38, 41) jeweils aus vier Linsengruppen gebildet sind, nämlich:

— einer ersten konvergierenden Gruppe (10) aus vier Linsen,
— einer zweiten divergierenden Gruppe (20) aus vier Linsen,
— einer dritten konvergierenden Gruppe (30) aus sechs Linsen,
— einer vierten konvergierenden Gruppe (40) aus zwei Linsen,

und die erste und dritte Gruppe zusammenhängen und verschiebbar sind und folgende Eigenschaften aufweisen:

9

— wenn das Objektiv zwischen der Schwenkachse und dem Objekt liegt, variiert die Vergrößerung entsprechend den Bewegungsgrenzen bei der Verschiebung der ersten und dritten Gruppe etwa von 1 bis 4 und

— wenn das Objektiv nach dem Schwenken um die Achse aus der vorgenannten Stellung in der zweiten Stellung liegt, variiert die durch Verschieben der ersten und zweiten Gruppe erzielte Verkleinerung etwa zwischen 1 und 0,25.

5. Optisches System nach Anspruch 4, dadurch gekennzeichnet, daß das oder die Objektive mit variabler Brennweite (7 und/oder 11—38 und 42) der folgenden Tabelle genügen, wobei:

— R der Krümmungsradius der aufeinanderfolgenden Linsenflächen bei einer Genauigkeit von 0,002 mm ist,
— E die Stärke der Linsen in mm bei einer Genauigkeit von 0,1 mm ist,
— Nd der Brechungsindex der Linsen ist und
— NU ($\nu$) eine komplementäre Eigenschaft der Linsen ist:

|  |  | R | E | Nd | NU |
|---|---|---|---|---|---|
|  | 1 | EBEN |  |  |  |
|  |  |  | 3.00000 | 1.696500 | 36,5 |
|  | 2 | 103.0000 |  |  |  |
|  |  |  | 6.00000 | 1.697000 | 56 |
|  | 3 | −202.4481 |  |  |  |
|  |  |  | 0.10000 | LUFT |  |
| GRUPPE 1 | 4 | 109.0000 |  |  |  |
|  |  |  | 5.50000 | 1.697000 | 56 |
|  | 5 | −184.0000 |  |  |  |
|  |  |  | 0.05000 | LUFT |  |
|  | 6 | −175.8000 |  |  |  |
|  |  |  | 3.00000 | 1.696500 | 36.5 |
|  | 7 | 264.6000 |  |  |  |
|  |  |  | 45.86100 | LUFT |  |
|  | 8 | −102.2700 |  |  |  |
|  |  |  | 2.00000 | 1.464500 | 65,7 |
|  | 9 | 83.8300 |  |  |  |
|  |  |  | 3.50000 | 1.740000 | 28,1 |
|  | 10 | 163.9200 |  |  |  |
|  |  |  | 1.50000 | LUFT |  |
| GRUPPE 2 | 11 | −200.3200 |  |  |  |
|  |  |  | 2.00000 | 1.464500 | 65,7 |
|  | 12 | 59.8200 |  |  |  |
|  |  |  | 3.50000 | 1.740000 | 28,1 |

# 0 036 341

TABLE (contd.)

|  |  |  | R | E | Nd | NU |
|---|---|---|---|---|---|---|
|  |  | 13 | 91.8607 |  |  |  |
|  |  |  |  | 46.76600 | LUFT |  |
|  |  | 14 | 1991.4000 |  |  |  |
|  |  |  |  | 3.00000 | 1.614099 | 44,4 |
|  |  | 15 | 200.0000 |  |  |  |
|  |  |  |  | 6.00000 | 1.608750 | 59 |
|  |  | 16 | −185.8000 |  |  |  |
|  |  |  |  | 0.10000 | LUFT |  |
|  | GRUPPE 3 | 17 | −212.8000 |  |  |  |
|  |  |  |  | 5.00000 | 1.608750 | 59 |
|  |  | 18 | −91.9756 |  |  |  |
|  |  |  |  | 0.10000 | LUFT |  |
|  |  | 19 | EBEN |  |  |  |
|  |  |  |  | 6.00000 | 1.608750 | 59 |
|  |  | 20 | −65.0000 |  |  |  |
|  |  |  |  | 3.00000 | 1.613099 | 44,4 |
|  |  | 21 | 65.0000 |  |  |  |
|  |  |  |  | 6.00000 | 1.608750 | 59 |
|  |  | 22 | EBEN |  |  |  |
|  |  |  |  | 47.34500 | LUFT |  |
|  |  | 23 | 93.2200 |  |  |  |
|  |  |  |  | 7.00000 | 1.603500 | 64 |
|  |  | 24 | −135.8300 |  |  |  |
|  | GRUPPE 4 |  |  | 0.50000 | LUFT |  |
|  |  | 25 | −114.6300 |  |  |  |
|  |  |  |  | 3.00000 | 1.613099 | 44,4 |
|  |  | 26 | 242.8000 |  |  |  |
|  |  |  |  | 141.53047 | LUFT |  |

## Claims

1. An optical system for producing special effects on an unexposed film, constituting an optical printer or a caption stand and comprising at least one variable-focal-length objective, associated with means for projecting at least one exposed film on the unexposed film with a view to obtaining the special effects, characterized in that it comprises means for producing a pivotal displacement of the variable-focal-length objective (7 and/or 11—38, 42) about a horizontal axis at right angles to the optical axis of the system so as to enable said objective to take up successively two symmetrical positions with respect to said axis after reversal through 180 degrees.

2. Optical system in accordance with claim 1, characterized in that the means for producing a pivotal displacement of the objective (7 or 11) about the axis aforesaid (Z—Z) comprise a vertical shoe (31, 31a) mounted on a support block (32) and rotatable about said axis, stops for adjusting the positions of the objective being placed on each side of the shoe.

3. Optical system in accordance with any one of the preceding claims, constituted by a caption stand comprising a projector (60) having a horizontal optical axis which is capable of unwinding a first film (43), a mirror (41) for reflecting the luminous flux to a condenser (39) which is intended to receive a document, an unexposed film (37) unwound by a camera (61) located above the condenser (39) and carried by a supporting element (62, 63) in such a manner as to ensure that the optical axis (A—A) of this latter and of the camera is vertical, and two variable-focal-length objectives such that one objective (42) is mounted between the projector (60) and the reflector (41) for pivotal displacement about a vertical axis at right angles to the horizontal optical axis and the other objective (38) is placed between the condenser (39) and the camera (61) for pivotal displacement about a horizontal axis at right angles to the vertical optical axis (Fig. 8).

4. Optical system in accordance with claim 1, characterized in that the variable-focal-length objective or objectives (7 and/or 11—38, 42) are each constituted by four groups of lenses, viz:

— a first convergent group (10) of four lenses,
— a second divergent group (20) of four lenses,
— a third convergent group (30) of six lenses,
— a fourth convergent group (40) of two lenses, the first and third groups being coupled together and movable, and the characteristics are such that:
— when the objective is located between its axis of pivotal displacement and the object, the magnification corresponding to the limits of displacement in translational motion of the first and third groups varies substantially between 1 and 4, and
— when the objective is placed in its second position after reversal about the axis from the previous position, the reduction obtained by translational displacement of the first and third groups varies substantially between 1 and 0.25.

5. Optical system in accordance with claim 4, characterized in that the variable-focal-length objective or objectives (7 and/or 11—38 and 42) provided within this latter corresponds to the following formula in which:

— R is the radius of curvature of the successive faces of the lenses with a precision of 0.002 mm,
— E is the thickness of the lenses in mm with a precision of 0.1 mm,
— Nd is the refractive index of the lenses and Nu ($v$) is a complementary characteristic of the lenses.

|         |   | R          | E       | Nd       | NU   |
|---------|---|------------|---------|----------|------|
|         | 1 | PLANE      |         |          |      |
|         |   |            | 3.00000 | 1.696500 | 36.5 |
|         | 2 | 103.0000   |         |          |      |
|         |   |            | 6.00000 | 1.697000 | 56   |
|         | 3 | −202.4481  |         |          |      |
|         |   |            | 0.10000 | AIR      |      |
| GROUP 1 | 4 | 109.0000   |         |          |      |
|         |   |            | 5.50000 | 1.697000 | 56   |
|         | 5 | −184.0000  |         |          |      |
|         |   |            | 0.05000 | AIR      |      |
|         | 6 | −175.8000  |         |          |      |
|         |   |            | 3.00000 | 1.696500 | 36.5 |

12

**0 036 341**

TABLE (contd.)

| | | R | E | Nd | NU |
|---|---|---|---|---|---|
| | 7 | 264.6000 | | | |
| | | | 45.86100 | AIR | |
| | 8 | −102.2700 | | | |
| | | | 2.00000 | 1.464500 | 65.7 |
| | 9 | 83.8300 | | | |
| | | | 3.50000 | 1.740000 | 28.1 |
| | 10 | 163.9200 | | | |
| | | | 1.50000 | AIR | |
| GROUP 2 | 11 | −200.3200 | | | |
| | | | 2.00000 | 1.464500 | 65.7 |
| | 12 | 59.8200 | | | |
| | | | 3.50000 | 1.740000 | 28.1 |
| | 13 | 91.8607 | | | |
| | | | 46.76600 | AIR | |
| | 14 | 1991.4000 | | | |
| | | | 3.00000 | 1.613099 | 44.4 |
| | 15 | 200.0000 | | | |
| | | | 6.00000 | 1.608750 | 59 |
| | 16 | −185.8000 | | | |
| | | | 0.10000 | AIR | |
| GROUP 3 | 17 | −212.8000 | | | |
| | | | 5.00000 | 1.608750 | 59 |
| | 18 | −91.9756 | | | |
| | | | 0.10000 | AIR | |
| | 19 | PLANE | | | |
| | | | 6.00000 | 1.608750 | 59 |
| | 20 | −65.0000 | | | |
| | | | 3.00000 | 1.613099 | 44.4 |
| | 21 | 65.0000 | | | |
| | | | 6.00000 | 1.608750 | 59 |

13

TABLE (contd.)

| | R | E | Nd | NU |
|---|---|---|---|---|
| 22 PLANE | | | | |
| | | 47.34500 | AIR | |
| 23 | 93.2200 | | | |
| | | 7.00000 | 1.603500 | 64 |
| 24 | −135.8300 | | | |
| GROUP 4 | | 0.50000 | AIR | |
| 25 | −114.6300 | | | |
| | | 3.00000 | 1.613099 | 44.4 |
| 26 | 242.8000 | | | |
| | | 141.53047 | AIR | |

.

.

14

Fig.1

Fig. 2

Fig. 3

Fig. 4

*Fig:5*

$\gamma=1 \longleftarrow \qquad \longrightarrow \gamma=\frac{1}{4}$

P

X                                                                    X

P'

10          20          30          40
Cvt        Div        Cvt        Cvt

*Fig:6*

        10              20              30              40

A                                                          141,5 m/m

17                                                          A'

12    15    19    26    28

13    14    16    18    21    25    27

        22  23    24

43,5 m/m          43,5 m/m

0 036 341

# Fig:7

Fig: 8